# EUROPÄISCHE PATENTSCHRIFT

(11) **EP 1 554 498 B1**
(45) Veröffentlichungstag und Bekanntmachung des Hinweises auf die Patenterteilung: **06.12.2006**
(21) Anmeldenummer: 03718701.0
(22) Anmeldetag: 21.03.2003
(51) Int. Cl.: F15B 1/12, F16L 55/04, F15B 1/10

(54) **HYDROSPEICHER, VORZUGSWEISE MEMBRANSPEICHER**
HYDRAULIC ACCUMULATOR IN PARTICULAR A MEMBRANE ACCUMULATOR
ACCUMULATEUR HYDRAULIQUE, DE PREFERENCE ACCUMULATEUR A MEMBRANE

(30) Priorität: 10.04.2002 DE 10215846
(43) Veröffentlichungstag der Anmeldung: 20.07.2005
(73) Patentinhaber: HYDAC TECHNOLOGY GMBH, D-66280 Sulzbach (DE)
(72) Erfinder: BALTES, Herbert, 66679 Losheim (DE)
(74) Vertreter: Bartels, Martin Erich Arthur
(86) Internationale Anmeldenummer: PCT/EP2003/002961
(87) Internationale Veröffentlichungsnummer: WO 2003/085270

(56) Entgegenhaltungen:
- EP-A- 0 360 648
- DE-A- 2 623 950
- DE-A- 2 817 011
- US-A- 4 312 382
- US-A- 5 524 671

## Beschreibung

Die Erfindung betrifft einen Hydrospeicher, vorzugsweise Membranspeicher, insbesondere für die Dämpfung von Pulsationen in Fluidkreisläufen, mit einem Speichergehäuse, mit mindestens einem Einlaß und einem Auslaß für das zu dämpfende Fluid, wobei ein Trennelement, vorzugsweise in Form einer Membran, einen Gasvorratsraum von einem Fluidraum innerhalb des Speichergehäuses trennt, gemäß der Merkmalsausgestaltung des Oberbegriffs des Patentanspruches 1.

Je nach der Wirkungsweise basieren Hydrospeicher auf dem Prinzip hydropneumatischer Blasen- und Membranspeicher oder eines Flüssigkeits-Schalldämpfers. Bei den hydropneumatischen Dämpfern wird zur Dämpfung die Kompressibilität eines Gases (meist Stickstoff) ausgenutzt. Dabei wird z.B. für einen Blasenspeicher die Blase je nach Größe der Druckschwankungen komprimiert bzw. entspannt. Ein ähnliches Verhalten zeigen ebenfalls Membranspeicher. Da beim Einsatz normaler Blasen- oder Membranspeicher infolge der ungünstigen Ankopplung der Hydroflüssigkeit an das Gasvolumen eine Dämpfungsbeeinträchtigung eintreten kann, wurden speziell hydropneumatische Dämpfer (Pulse-Tone-Pulsationsdämpfer) entwickelt. Diese Art von Dämpfern hat einen Inline-Anschluß-Block, mit dem die Volumen- bzw. Druckschwankungen optimal an das Gasvolumen angekoppelt werden. Dadurch lassen sich gute Dämpfungseigenschaften bis zu einer Frequenz von etwa 500Hz erzielen (vgl. Mannesmann-Rexroth-Projektierungen "Konstruktion von Hydroanlagen" - Der Hydrauliktrainer, Bd.3, 1.Aufl. Seite 106).

Bei bekannten Lösungen im Stand der Technik, wie sie auf dem Markt frei erhältlich sind, hat man zur Erhöhung des Gasvorratsvolumens im Speichergehäuse eine Anschlußstelle derart vorgesehen, daß auf der Gasvorrätsseite des Speichers man eine Speicherflasche angebracht hat, in der das zusätzliche Arbeitsgas, insbesondere in Form von Stickstoffgas, bevorratet ist. Die dahingehend bekannten Lösungen sind teuer in der Herstellung, bauen darüber hinaus geometrisch groß auf und an der genannten Anschlußstelle kann es zu Dichtigkeitsproblemen und mithin zu einem Verlust an Arbeitsgas kommen. Um die dahingehenden Lösungen zu verbessern, ist bereits vorgeschlagen worden, den Gasvorratsraum im Speichergehäuse selbst zu vergrößern und auf zusätzliche Vorratsflaschen am Speichergehäuse zu verzichten. Durch die Vergrößerung des Gasvorratsraumes im Speichergehäuse erhöht sich jedoch auch der freie Verfahrweg für das Trennelement bzw. die Trennmembran, so daß diese stark strapaziert wird, beispielsweise durch Auffalt- und Überdehnungsvorgänge mit der Folge, daß es zu einem baldigen Versagen der Speichereinrichtung kommt.

Bei den eingangs genannten Lösungen mit der aufgesetzten Speicherflasche an Arbeitsgas konnte man zwar die freie Verfahrstrecke dann innerhalb des Speichergehäuses für das Trennelement reduzieren, was sich jedoch insgesamt ungünstig auf das Arbeitsvermögen des Speichers, insbesondere bezogen auf die Pulsationsdämpfungen, auswirkt.

Des weiteren weisen die bekannten Lösungen Trennelemente aus Elastomermaterial auf, die grundsätzlich bis zu einem gewissen Grad gasdurchlässig sind, so daß über die Diffusions- und Permeationsvorgänge sich langfristig ein Gasverlust im Speicher einstellt, indem der Gasvorrat zur Fluidseite hin abgegeben wird.

Durch die US-A-4 312 382 ist ein gattungsgemäßer Hydrospeicher in der Art eines Membranspeichers bekannt, der insbesondere der Dämpfung von Pulsationen in Fluidkreisläufen dient. Die bekannte Lösung ist mit einem Speichergehäuse versehen, mit mindestens einem Einlaß und einem Auslaß für das zu dämpfende Fluid, wobei ein Trennelement in Form einer Membran einen Gasvorratsraum von einem Fluidraum innerhalb des Speichergehäuses trennt, wobei innerhalb des Speichergehäuses eine Anlageeinrichtung angeordnet ist, die sich innerhalb des Gasvorratsraumes erstreckt oder diesen begrenzt und die eine Anlagemöglichkeit für das Trennelement bildet, wobei der Gasvorratsraum des Speichergehäuses derart groß dimensioniert ist, daß das gesamte benötigte Gasvolumen im Speichergehäuse selbst bevorratet ist. Die bekannte Lösung zeichnet sich insbesondere dadurch aus, daß die angesprochene Trennelement-Lösung für den Hydrospeicher innerhalb des Speichergehäuses auf gegenüberliegenden Seiten zweimal vorhanden ist, die sich insoweit jedoch einen gemeinsamen Fluideinlaß und -auslaß miteinander teilen. Aufgrund der angesprochenen Doppelanordnung weist die bekannte Speicherlösung zwar ein hohes Arbeitsvermögen auf; benötigt aber insgesamt dennoch viel Einbauraum.

Des weiteren ist durch die US-A-5 524 671 eine Hydrospeicher-Lösung mit einem Speichergehäuse bekannt, die eine elastisch nachgiebige Trennmembran aufweist, die randseitig über einen Befestigungsring am Inneren des Speichergehäuses gehalten ist. In die mehrschichtig aufgebaute Trennmembran ist ein Verschlußteller für den Fluidanschluß eingeknöpft und um eine Gaspermeation von der Gasseite auf die Fluidseite des Speichers verringern zu helfen, ist die elastisch nachgiebige Trennmembran mit Sperrschichten beispielsweise aus Polytetrafluorethylen versehen. Bei dieser bekannten Lösung kann sich die Trennmembran frei im Speicherinnern je nach der Arbeitssituation des Speichers hin- und herbewegen, so daß Überdehnungen nicht auszuschließen sind, die trotz des Mehrschichtaufbaus mit Gasbarrieren zu Gasverlusten oder gar zu einem Einreißen der Trennmembran führen können.

Ausgehend von diesem Stand der Technik liegt der Erfindung die Aufgabe zugrunde, die bekannten Hydrospeicherlösungen dahingehend weiter zu verbessern, daß zum einen das Arbeitsvermögen des Speichers verbessert ist, daß dieser in einer optimierten Ausführungsform nur wenig Einbauraum benötigt und bei dem Gasverluste weitestgehend reduziert sind. Eine dahingehende Aufgabe löst ein Hydrospeicher mit den Merkmalen des Patentanspruches.

Dadurch, daß gemäß dem kennzeichnenden Teil des Patentanspruches 1 das Trennelement mittig mit einer Abschlußplatte für den Ein- und den Auslaß versehen ist, die über eine Schraubverbindung fest mit dem Trennelement verbunden ist und daß in der Anlageeinrichtung eine durchgehende Ausnehmung vorhanden ist für den Eingriff eines Teiles der genannten Schraubverbindung kann in platzsparender Weise das gesamte benötigte Gasvolumen im Speichergehäuse selbst bevorratet werden, wobei auf zusätzliche Speicherflaschen an Arbeitsgas am Speichergehäuse verzichtet werden kann. Neben dem reduzierten Einbauraum ergibt sich hieraus auch der Vorteil fehlender Leckagenstellen mit zugehörigem Gasverlust. Hierzu trägt auch mit bei, daß für das Trennelement eine Anlageeinrichtung mit durchgehender Ausnehmung vorgesehen ist, in die ein Teil der genannten Schraubverbindung eingreift, woraus sich ein schonender Speicherbetrieb ergibt und Versagensfälle des Trennelementes sind weitestgehend vermieden.

Bei einer bevorzugten Ausführungsform des Hydrospeichers besteht die Membran aus einem Elastomermaterial, insbesondere aus einem Gummimaterial, das als Gasbarriereschicht Polytetrafluorethylen (Teflon^{®}) oder Verbindungen hiervon aufweist. Gegenüber den bekannten Lösungen sind mit einer dahingehenden mit einer Gasbarriereschicht versehenen Trennmembran die Gasdiffusions- und Permeationsvorgänge zur Fluidseite hin deutlich reduziert, was dem Arbeitsvermögen des Speichers entgegenkommt. Da weniger Gas verloren geht, muß für ein optimiertes Arbeitsvermögen des Speichers auch weniger Gas eingesetzt werden, so daß der Speicher bei vergleichbarer Arbeitsleistung von seinen geometrischen Abmessungen her klein aufbauend ausgelegt sein kann.

Weitere vorteilhafte Ausgestaltungen des erfindungsgemäßen Hydrospeichers sind Gegenstand der Unteransprüche.

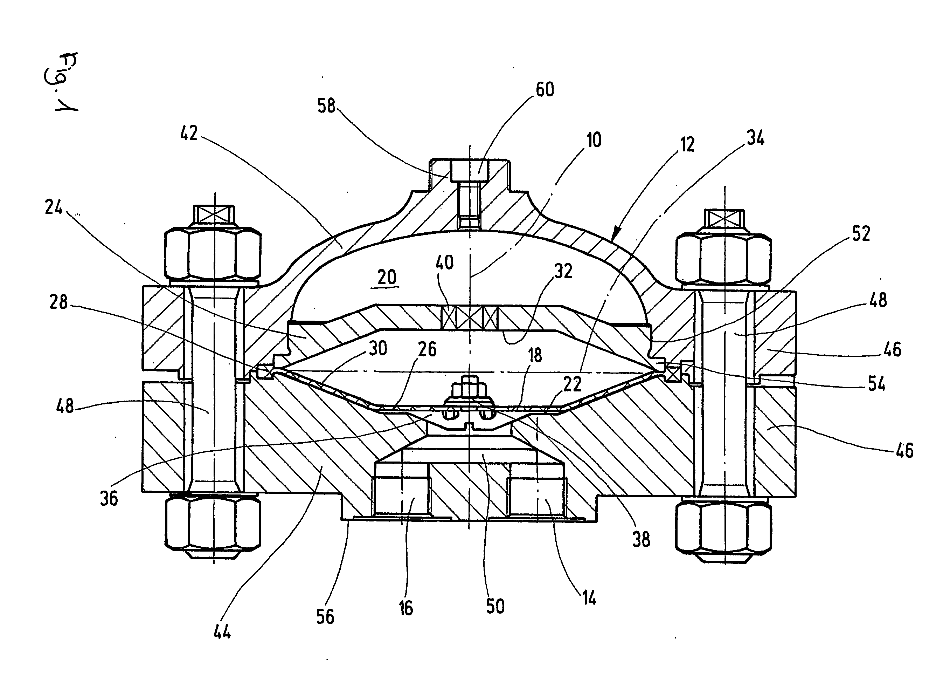

lm folgenden wird der erfindungsgemäße Hydrospeicher anhand eines Ausführungsbeispiels nach der Zeichnung näher erläutert. Dabei zeigt in nicht maßstäblicher und prinzipieller Darstellung die einzige Figur einen Längsschnitt durch den erfindungsgemäßen Hydrospeicher.

Bei dem Hydrospeicher handelt es sich um einen sog. Membranspeicher, der im wesentlichen zu seiner Längsachse 10 rotationssymmetrisch aufgebaut ist. Der Speicher dient insbesondere der Dämpfung von Pulsationen in Fluidkreisläufen, wobei der Fluidkreislauf, insbesondere in Form eines hydraulischen Kreislaufs, hier nicht näher dargestellt ist. Der Hydrospeicher weist ein als Ganzes mit 12 bezeichnetes Speichergehäuse auf, das auf seiner Unterseite mit mindestens einem Einlaß 14 und einem Auslaß 16 versehen ist. Innerhalb des Hydrospeichers ist ein Trennelement 18 angeordnet in Form einer Trennmembran. Das dahingehende Trennelement 18 trennt einen Gasvorratsraum 20 von einem Fluidraum 22. In der Figur ist das Trennelement 18 in seinem Ausgangszustand dargestellt, bei dem der Fluidraum 22 im wesentlichen über den Auslaß 16 entleert ist und das Arbeitsgas im Gasvorratsraum 20 nimmt im wesentlichen das gesamte Volumen des Speichers ein.

In Abhängigkeit von der jeweiligen Arbeitsstellung des Trennelementes 18, bei der dieses sich in Blickrichtung auf die Figur gesehen nach oben bewegt, vergrößert sich dann entsprechend der Fluidraum 22 bei gleichzeitiger Reduzierung des Gasvolumens im Gasvorratsraum 20. Innerhalb des Speichergehäuses 12 ist eine Anlageeinrichtung 24 angeordnet, die sich innerhalb des Gasvorratsraumes 20 erstreckt oder diesen begrenzt, sofern das Trennelement 18 in seiner völlig angehobenen Stellung auf seiner Oberseite in Anlage ist mit der Unterseite der Anlageeinrichtung 24. Wie sich des weiteren aus der Figur ergibt, ist der Gasvorratsraum 20 derart groß dimensioniert, daß ohne zusätzliche aufsetzbare Speicherflasche das gesamte benötigte Gasvolumen im Speichergehäuse 12 selbst bevorratet ist.

Das Trennelement 18 als Membran ist aus einem Elastomermaterial, wie Gummimaterial, gebildet und als Gasbarriereschicht werden Polytetrafluorethylen oder Verbindungen hiervon eingesetzt. Die Substanz Polytetrafluorethylen ist allgemein unter der Markenbezeichnung "Teflon" bekannt, das auf die Herstellerin Du Pont zurückgeht. Vorzugsweise ist dabei vorgesehen, daß zumindest eine Seite, beispielsweise die Oberseite der Membran, mit Polytetrafluorethylen beschichtet ist. Zusätzlich oder alternativ kann auch vorgesehen sein, Sperrblöcke, also Agglomerate von Polytetrafluorethylen-Teilen, in die Gummimembran selbst einzubringen. Trifft dann ein Gasmolekül auf einen dahingehenden Sperrblock innerhalb der Membran, wird es auf die Gasseite zurückgelenkt und eine Diffusion ist nur noch möglich in den Abständen zwischen den Sperrblöcken, was die Permeationsmöglichkeiten entsprechend reduziert. Bei der dahingehenden Ausgestaltung bleibt dann auch nach wie vor gewährleistet, daß die Membran hochelastisch bleibt.

Wie die Figur des weiteren zeigt, ist das Trennelement 18 im Querschnitt und im Ausgangszustand gesehen mit einem eben verlaufenden mittigen Bodenbereich 26 ausgebildet, der in Richtung der ringförmigen Befestigungsstelle 28 mit dem Speichergehäuse 12 in einem vorgebbaren Winkel, beispielsweise zwischen 20° und 30°, vorzugsweise 25°, zur Anlageeinrichtung 24 hin eine geneigte Membranfläche 30 aufweist. Aufgrund der dahingehenden Ausgestaltung ist eine sichere Abwicklung des Trennelements 18 innerhalb des Speichergehäuses 12 erreicht, ohne daß ein Einreißen od. dgl. befürchtet werden muß. Insbesondere weist die Anlageeinrichtung 24 zumindest auf ihrer Anlageseite 32 eine Form auf, die um 180° um eine Querachse 34 des Speichergehäuses 12 bildlich geklappt der Form des Trennelementes 18 in seinem Ausgangszustand entspricht.

Das Trennelement 18 ist mittig mit einer Abschlußplatte 36 versehen, die den Einlaß 14 und den Auslaß 16 im Ausgangszustand des Trennelementes 18 gemäß der Darstellung nach der Figur verschließen kann. Die Abschlußplatte 36 ist über eine Schraubverbindung 38 fest mit dem Trennelement 18 verbunden, wobei in der Anlageeinrichtung 24 koaxial zur Längsachse 10 des Speichergehäuses 12 angeordnet eine durchgehende Ausnehmung 40 vorhanden ist für den Eingriff eines Teils der genannten Schraubverbindung 38, insbesondere in Form des oberen Teils des Schraubenbolzens zusammen mit der Abschlußmutter. Über die genannte Ausnehmung 40 in Form eines Innensechskants ist auch sichergestellt, daß die Teile des Gasvorratsraumes 20 oberhalb der Anlageeinrichtung 24 in kommunizierender Verbindung stehen mit denjenigen Teilen des Gasvorratsraumes 20, die sich zwischen der Oberseite des Trennelementes 18 erstrekken und der Unterseite der Anlageeinrichtung 24 in Form der Anlageseite 32.

Die beiden Gehäusehälften 42,44 des Speichergehäuses 12 sind an ihrer Außenumfangsseite mit Festlegeflanschen 46 versehen, die von diametral einander gegenüberliegenden Schraubenbolzen 48 durchgriffen den Zusammenbau des Speichergehäuses 12 ermöglichen. Der Einlaß 14 sowie der Auslaß 16 sind parallel zur Längsachse 10 des Speichergehäuses 12 in den Fluidraum 22 über einen gemeinsamen Vorraum 50 mündend angeordnet. Auf diese Art und Weise ergibt sich ein strömungsoptimierter Zu- und Abluß des Fluidmediums in den Fluidraum 22, wozu mit beiträgt, daß der genannte Vorraum 50 sich in Richtung der Abschlußplatte 36 konisch verjüngt.

Die Anlageeinrichtung 24 ist mit ihrer Außenumfangsseite über ein Schraubgewinde 52 in das Innere des Speichergehäuses 12 einschraubbar, wobei über eine absatzartige Verbreiterung 54 an der Unterseite der Anlageeinrichtung 24 das Trennelement 18 zusätzlich im Speichergehäuse 12 entlang seines außenumfangsseitigen Befestigungsrandes 28 gehalten ist. Hierzu ist die außenumfangsseitige Anlagefläche der Verbreiterung 54 zumindest in teilweiser Anlage mit der randartigen Verbreiterung der Befestigungsstelle 28 des Trennelementes 18.

Wie des weiteren die Figur zeigt, ist die obere Gehäusehälfte 42 im Querschnitt in der Art eines Hohlraumes mit elliptischer oder halbkugelförmiger Querschnittsform ausgebildet, wohingegen auf der Fluidseite 22 die untere Gehäusehälfte 44 zumindest im Bereich an der Ein- und Auslaßseite als ebene Platte 56 ausgebildet ist. Die obere Gehäusehälfte 42 weist mittig eine Anschlußstelle 58 auf, die von einer Verschlußschraube 60 verschlossen, nach deren Entfernen dem Nachfüllen des Speichers dient. Die dahingehenden Vorgänge sind bekannt, so daß an dieser Stelle hierauf nicht mehr näher eingegangen wird. Durch die Wahl des genannten Hohlraumes auf der Gasvorratsseite ist das Arbeitsvermögen des Speichers entsprechend erhöht, ohne daß Zusatzaggregate, wie Zusatzflaschen od. dgl., zum Einsatz kommen müssen.

Der erfindungsgemäße Hydrospeicher weist ein hohes Arbeitsvermögen auf, benötigt wenig Einbauraum und hat eine lange Standzeit, da zum einen das Trennelement 18 mit einer Gasbarriereschicht versehen sein kann und darüber hinaus die Abwicklung des Trennelementes 18 gezielt vonstatten geht, und eine Überdehnung der Trennmembran ist über die entsprechend ausgebildete Anlageseite 32 der Anlageeinrichtung 24 mit Sicherheit vermieden.

## Patentansprüche

1. Hydrospeicher, vorzugsweise Membranspeicher, insbesondere für die Dämpfung von Pulsationen in Fluidkreisläufen, mit einem Speichergehäuse (12), mit mindestens einem Einlaß (14) und einem Auslaß (16) für das zu dämpfende Fluid, wobei ein Trennelement(18), vorzugsweise in Form einer Membran, einen Gasvorratsraum (20) von einem Fluidraum (22) innerhalb des Speichergehäuses (12) trennt, wobei innerhalb des Speichergehäuses (12) eine Anlageeinrichtung (24) angeordnet ist, die sich innerhalb des Gasvorratsraumes (20) erstreckt oder diesen begrenzt und die eine Anlagemöglichkeit für das Trennelement (18) bildet, und wobei der Gasvorratsraum (20) des Speichergehäuses (12) derart groß dimensioniert ist, daß das gesamte benötigte Gasvolumen im Speichergehäuse (12) selbst bevorratet ist, **dadurch gekennzeichnet, daß** das Trennelement (18) mittig mit einer Abschlußplatte (36) für den Ein- und Auslaß (14, 16) versehen ist, die über eine Schraubverbindung (38) fest mit dem Trennelement (18) verbunden ist und daß in der Anlageeinrichtung (24) eine durchgehende Ausnehmung (40) vorhanden ist für den Eingriff eines Teiles der genannten Schraubverbindung (38).

2. Hydrospeicher, nach Anspruch 1, **dadurch gekennzeichnet, daß** die Membran aus einem Elastomermaterial, insbesondere aus einem Gummimaterial, gebildet ist und als Gasbarriereschicht Polytetrafluorethylen oder Verbindungen hiervon aufweist.

3. Hydrospeicher nach Anspruch 2, **dadurch gekennzeichnet, daß** die Membran mit Polytretrafluorethylen zumindest auf einer Seite beschichtet ist und/oder in Form von Sperrblöcken in die Membran selbst eingebracht ist.

4. Hydrospeicher nach einem der Ansprüche 1 bis 3, **dadurch gekennzeichnet, daß** das Trennelement (18) im Querschnitt und im Ausgangszustand gesehen einen eben verlaufenden Bodenbereich (26) aufweist, der in Richtung der ringförmigen Befestigungsstelle (28) mit dem Spei- > chergehäuse (12) in einem vorgebbaren Winkel zur Anlageeinrichtung (24) hin eine geneigte Membranfläche (30) aufweist.

5. Hydrospeicher nach einem der Ansprüche 1 bis 4, **dadurch gekennzeichnet, daß** die Anlageeinrichtung (24) zumindest auf ihrer Anlageseite eine Form aufweist, die um 180° um eine Querachse (34) des Speichergehäuses (12) bildlich geklappt der Form des Trennelementes (18) in seinem Ausgangszustand entspricht.

6. Hydrospeicher nach einem der Ansprüche 1 bis 5, **dadurch gekennzeichnet, daß** die beiden Gehäusehälften (42,44) des Speichergehäuses (12) an ihrer Außenumfangsseite mit Festlegeflanschen (46) versehen sind, die von diametral einander gegenüberliegenden Schraubenbolzen (48) durchgriffen den Zusammenbau des Speichergehäuses (12) ermöglichen.

7. Hydrospeicher nach einem der Ansprüche 1 bis 6, **dadurch gekennzeichnet, daß** der Einlaß (14) und der Auslaß (16) parallel zur Längsachse (10) des Speichergehäuses (12) in den Fluidraum (22) über einen gemeinsamen Vorraum (50) münden.

8. Hydrospeicher nach einem der Ansprüche 1 bis 7, **dadurch gekennzeichnet, daß** die Anlageeinrichtung (24) mit ihrer Außenumfangsseite in das Innere des Speichergehäuses (12) einschraubbar ist und daß über eine absatzartige Verbreiterung (54) der Anlageeinrichtung (24) das Trennelement (18) zusätzlich im Speichergehäuse (12) entlang seines außenumfangsseitigen Befestigungsrandes (28) gehalten ist.

9. Hydrospeicher nach einem der Ansprüche 1 bis 8, **dadurch gekennzeichnet, daß** der Teil (42) des Speichergehäuses(12), der den Gasvorratsraum (20) begrenzt, in der Art eines Hohlraumes mit elliptischer oder halbkugelförmiger Querschnittsform ausgebildet ist und daß auf der Fluidseite (22) des Speichergehäuses (12) dieses an der Ein- und Auslaßseite (14,16) im wesentlichen als ebene Platte (56) ausgebildet ist.

## Claims

1. Hydro store, preferably a membrane store, in particular for the damping of pulsation in fluid circuits, with a storage housing (12) with at least one inlet (14) and one outlet (16) for the fluid to be damped, whereby a separation element (18), preferably in the form of a membrane, separates a gas storage chamber (20) from a fluid chamber (22) within the storage housing (12), whereby an abutment means (24) is located within the storage housing (12), which extends inside the gas storage chamber (20) or delimits the same, and which forms an abutment possibility for the separation element (18), and whereby the gas storage chamber (20) of the storage housing (12) is sized in such a way that the entire required gas volume can be stored in the storage housing (12) itself, **characterised in that** the separating element (18) is centrally equipped with a closure plate (36) for the inlet and outlet (14, 16), the same being firmly connected with the separating element (18) via a screw connection (38), and **in that** a continuous recess (40) is located in the abutment means (24) for engaging a part of the said screw connection (38).

2. Hydro store according to Claim 1, **characterised in that** the membrane consists of an elastomer material, in particular of a rubber material, and comprises polytetrafluoroethylene or compounds of the same as a gas barrier layer.

3. Hydro store according to Claim 2, **characterised in that** the membrane is coated with polytetrafluoroethylene at least on one side and/or the same is inserted into the membrane in the form of locking blocks.

4. Hydro store according to one of the Claims 1 to 3, **characterised in that** the cross-section of the separating element (18) comprises a level floor area (26) when viewed in its starting position, the same enclosing a predetermined angle with the abutment means (24) in the direction of the annular fitting point (28) of the storage housing (12), and comprising an inclined membrane surface (30).

5. Hydro store according to one of the Claims 1 to 4, **characterised in that** the abutment means (24) is of a shape that is folded by 180° around a diagonal axis (34) of the storage housing (12) at least on its abutment side (32) and equals the shape of the separating element (18) in its starting position.

6. Hydro store according to one of the Claims 1 to 5, **characterised in that** the two housing halves (42, 44) of the storage housing (12) are equipped with fitting flanges (46) on their outer circumference side, through which diametrically opposing screw bolts (48) project and enable the assembly of the storage housing (12).

7. Hydro store according to one of the Claims 1 to 6, **characterised in that** the inlet (14) and the outlet (16) open out into the fluid chamber (22) via a common pre-chamber (50) parallel to the longitudinal axis (10) of the storage housing (12).

8. Hydro store according to one of the Claims 1 to 7, **characterised in that** the abutment means (24) can be screwed into the interior of the storage housing (12) with its outer circumference side, and **in that** the separating element (18) is additionally held in the storage housing (12) along its outer circumference side fitting edge (28) by means of a step-like widening (54) on the underside of the abutment means (24).

9. Hydro store according to one of the Claims 1 to 8, **characterised in that** the part (42) of the storage housing (12) that delimits the gas storage chamber (20) is the shape of a hollow with an elliptic or semi-spherical cross-section, whereas the lower housing half (12) on the fluid side (22) takes the form of a level plate (56) at least in the area of the inlet and outlet side (14, 16).

## Revendications

1. Accumulateur hydraulique, de préférence accumulateur à membrane, en particulier pour l'amortissement de pulsations dans des circuits de fluide, comprenant un boîtier d'accumulateur (12), ayant au moins une entrée (14) et une sortie (16) pour le fluide à amortir, dans lequel, à l'intérieur du boîtier d'accumulateur (12), un élément de séparation (18), de préférence réalisé sous la forme d'une membrane, sépare une chambre de réserve de gaz (20) d'une chambre de fluide (22), un dispositif d'installation (24), s'étendant dans la chambre de réserve de gaz (20) ou la délimitant et constituant une possibilité d'installation pour l'élément de séparation (18), étant disposé à l'intérieur du boîtier d'accumulateur (12), et la chambre de réserve de gaz (20) du boîtier d'accumulateur (12) étant dimensionnée de manière à ce que le volume total de gaz nécessaire soit mis en réserve à l'intérieur du boîtier d'accumulateur même, **caractérisé en ce que** l'élément de séparation (18) est muni en son centre d'une plaque d'.obturation (36) de l'entrée et de la sortie (14, 16), la plaque d'obturation étant fixée fermement à l'élément de séparation (18) au moyen d'un vissage (38), et **en ce qu'**un évidement traversant (40) est prévu dans le dispositif d'installation (24) pour la pénétration d'une partie du vissage (38).

2. Accumulateur hydraulique selon la revendication 1, **caractérisé en ce que** la membrane est en un matériau élastomère, en particulier en un matériau en caoutchouc, et comporte, en tant que couche faisant barrière aux gaz, du polytétrafluoréthylène ou des composés à base de polytétrafluoréthylène.

3. Accumulateur hydraulique selon la revendication 2, **caractérisé en ce que** la membrane est revêtue, au moins d'un côté, de polytétrafluoréthylène et/ou **en ce que** du polytétrafluoréthylène est introduit sous forme de blocs d'arrêt dans la membrane même.

4. Accumulateur hydraulique selon l'une des revendications 1 à 3, **caractérisé en ce que** l'élément de séparation (18) présente, vu en coupe et à l'état initial, une zone inférieure (26) s'étendant dans un plan et présentant une face de membrane (30) inclinée en direction de la zone de fixation (28) annulaire avec le boîtier d'accumulateur (12), sous un angle pouvant être prédéfini en direction du dispositif d'installation (24).

5. Accumulateur hydraulique selon l'une des revendications 1 à 4, **caractérisé en ce que** le dispositif d'installation (24) présente, au moins sur son côté installation, une forme qui correspond, rabattue de 180° autour d'un axe transversal (34) du boîtier d'accumulateur (12), à la forme de l'élément de séparation (18) lorsque celui-ci se trouve à son état initial

6. Accumulateur hydraulique selon l'une des revendications 1 à 5, **caractérisé en ce que** les deux moitiés de boîtier (42, 44) du boîtier d'accumulateur (12) sont munies, du côté de leur périphérie extérieure, de rebords de fixation (46), permettent d'effectuer l'assemblage du boîtier d'accumulateur (12) au moyen de de boulons (48) traversants, diamétralement opposés l'un à l'autre.

7. Accumulateur hydraulique selon l'une des revendications 1 à 6, **caractérisé en ce que** l'entrée (14) et la sortie (16) débouchent parallèlement à l'axe longitudinal (10) du boîtier d'accumulateur (12) dans la chambre de fluide (22) par l'intermédiaire d'une préchambre (50) commune.

8. Accumulateur hydraulique selon l'une des revendications 1 à 7, **caractérisé en ce que** le dispositif d'installation (24) peut être vissé, par son côté de périphérie extérieure, sur la face intérieure du boîtier d'accumulateur (12) et **en ce que** l'élément de séparation (18) est, en outre, maintenu dans le boîtier d'accumulateur (12), le long de son bord de fixation (28) situé côté périphérie extérieure, et ce au moyen d'un élargissement (54) du genre d'un talon, du dispositif d'installation (24).

9. Accumulateur hydraulique selon l'une des revendications 1 à 8, **caractérisé en ce que** la partie (42) du boîtier d'accumulateur (12), qui délimite la chambre de réserve de gaz (20), est réalisée à la façon d'un espace creux ayant une section transversale de forme elliptique ou hémisphérique, et **en ce que**, du côté fluide (22) du boîtier d'accumulateur (12), celui-ci est réalisé essentiellement en tant que plaque (56) plane, du côté de l'entrée et de la sortie (14, 16).
